# EUROPEAN PATENT SPECIFICATION

(11) **EP 3 851 592 B1**
(45) Date of publication and mention of the grant of the patent: **15.10.2025**
(21) Application number: 20208348.1
(22) Date of filing: 18.11.2020
(51) Int. Cl.: E02F 3/96, B60K 17/28, E02F 9/20, E02F 9/26, G06F 8/65

(54) **COMMUNICATION SYSTEM FOR WORKING MACHINE**
KOMMUNIKATIONSSYSTEM FÜR EINE ARBEITSMASCHINE
SYSTÈME DE COMMUNICATION POUR MACHINE DE TRAVAIL

(30) Priority: 28.12.2019 JP 2019239970; 28.12.2019 JP 2019239973
(43) Date of publication of application: 21.07.2021
(73) Proprietor: Kubota Corporation, Osaka-shi, Osaka 556-8601 (JP)
(72) Inventor: MIURA, Keisuke, Sakai-shi Osaka 590-0823 (JP); IKEDA, Ryo, Sakai-shi Osaka 590-0823 (JP); HAYASHI, Shinji, Sakai-shi Osaka 590-0823 (JP); KINUGAWA, Ryosuke, Sakai-shi Osaka 590-0823 (JP); FUJIMOTO, Koichi, Sakai-shi Osaka 590-0823 (JP)
(74) Representative: Müller-Boré & Partner Patentanwälte PartG mbB

(56) References cited:
- WO-A1-03/000997
- JP-A- 2010 176 372
- SE-A1- 1 530 129
- US-A1- 2018 354 458

## Description

### [TECHNICAL FIELD]

The present invention relates to a communication system for a working machine such as an agriculture machine and a construction machine.

### [BACKGROUND ART]

Patent Document 1 is known as a system for writing setting information of a working machine.

In a program updating method for a controller device of a working machine configured to write the setting information to the controller device of the working machine connected to a vehicle communication network of Patent Document 1, the program updating method includes steps of preliminarily setting data for checking a computer program of the controller device for the working machine, erasing data to be used to check an existing computer program preliminarily stored in the controller device before the setting information is written to the controller device for the working machine, and then writing the setting information to the controller device for the working machine and writing data to be used to check the setting information lastly to the controller device for the working machine. US 2018/354458 A1 discloses an anti-theft system for a working machine including a communication device disposed on the working machine, the communication device having a first communicator, a mobile terminal having a storage to store authentication information, and a second communicator, and a control device disposed on the working machine, the control device having an authentication processor to execute an authentication processing that determines whether to provide a permission of driving a driving portion of the working machine based on the authentication information.

### [RELATED ART DOCUMENTS]

### [PATENT DOCUMENTS]

[Patent Document 1] Japanese Unexamined Patent Publication No. 2010-176372

### [DISCLOSURE OF THE INVENTION]

### [PROBLEMS TO BE SOLVED BY THE INVENTION]

Patent Document 1 is very useful because it allows setting information to be properly written to a controller device installed in a working machine. However, Patent Document 1 does not consider updating the setting information of the working machine, that is, another working device connected to the vehicle body.

In view of the above-mentioned problems, the present invention intends to provide a communication system for a working machine capable of easily updating setting information of a working device connected to the machine body. The present invention is defined by the independent claim. Preferred examples are defined in the dependent claims.

### [EFFECTS OF THE INVENTION]

According to the present invention. it is possible to easily update setting information of a working machine connected to a machine body.

### [BRIEF DESCRIPTION OF THE DRAWINGS]

FIG. 1 is a configuration view of a speed-shifter device according to an embodiment of the present invention.
FIG. 2 is a perspective view of a lifter device according to an embodiment of the present invention.
FIG. 3 is a view illustrating a control block and a communication system for a working device according to an embodiment of the present invention.
FIG. 4 is a view illustrating a first connector and a communication cable according to an embodiment of the present invention.
FIG. 5 is an explanation view explaining automatic traveling according to an embodiment of the present invention.
FIG. 6 is a view illustrating an example of setting information according to an embodiment of the present invention.
FIG. 7A is a flowchart illustrating transmitting and receiving operations of setting information according to an embodiment of the present invention.
FIG. 7B is a flowchart illustrating transmitting and receiving operations of setting information different from FIG. 7A according to an embodiment of the present invention.
FIG. 8 is a view illustrating a control program included in setting information stored in a storage device according to an example not covered by the claims but useful to understand the invention.
FIG. 9 is a view illustrating a configuration where a control program of a working device F is added to FIG. 8 according to an example, not covered by the claims but useful to understand the invention.
FIG. 10 is a flowchart illustrating updating of a control program according to an example, not covered by the claims but useful to understand the invention.
FIG. 11 is a whole view of a tractor according to an embodiment of the present invention.

### [BEST MODE FOR CARRYING OUT THE INVENTION]

Hereinafter, an embodiment of the present invention will be described with appropriate reference to the drawings.

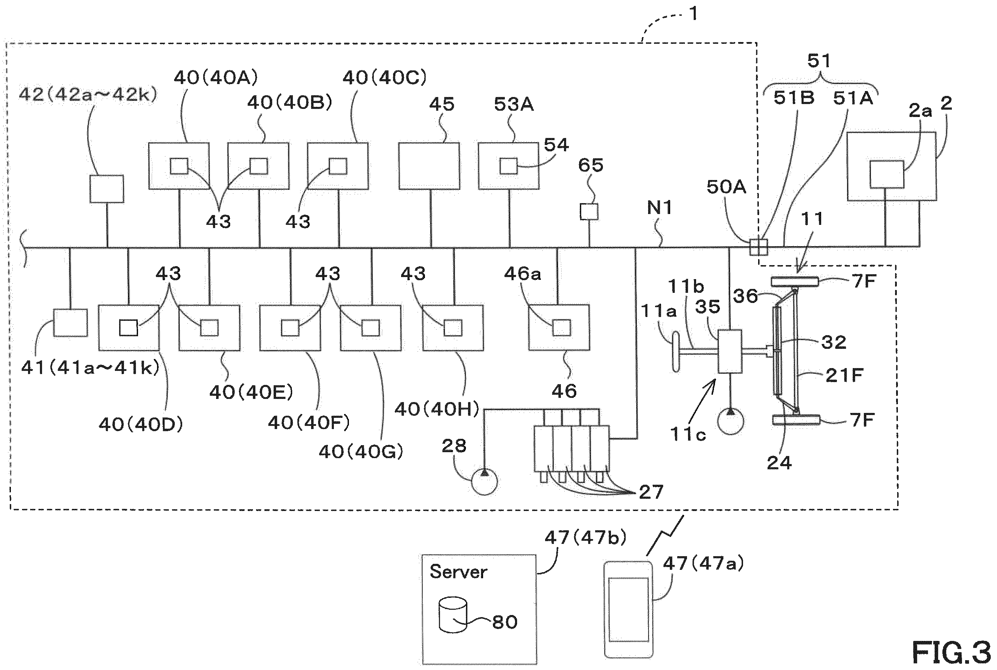

FIG. 3 shows a control block of working machine 1 and a communication system of working machine 1. The working machine 1 is an agricultural machine such as a tractor, a combine, a rice planter, and the like, and a construction machine such as a loader and a backhoe.

The working machine will be described below, taking the tractor as an example. As described above, the working machine 1 is not limited to the tractor, and therefore, the configuration common to agricultural machinery such as a combine, a rice planter, and the like, and a construction machine such as a loader and a backhoe can be replaced. That is, the description of the tractor can be read as other agricultural and construction machinery.

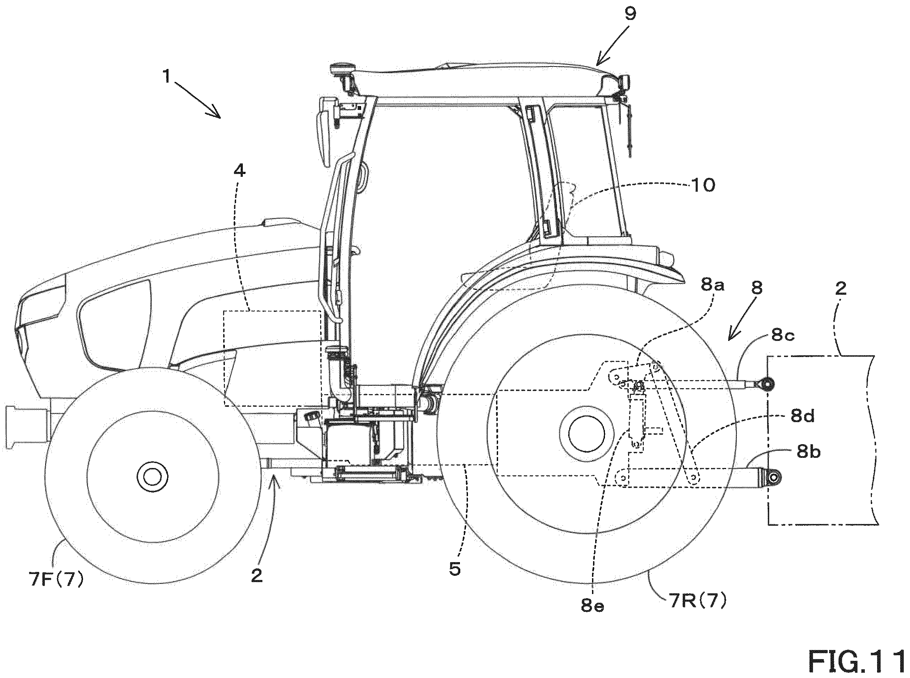

As shown in FIG. 11, the tractor is provided with a machine body 3 having a traveling device 7, a prime mover 4, and a speed-shifter device 5. The traveling device 7 is a device having a front wheel 7F and a rear wheel 7R. The front wheels 7F may be of the tire or crawler type.

The rear wheels 7R may also be of the tire or crawler type. The prime mover 4 is a gasoline engine, an internal combustion engine such as a diesel engine, an electric motor, and the like. In this embodiment, the prime mover 4 is a diesel engine.

The speed-shifter device 5 is capable of switching the propulsion of the traveling device 7 by shifting gears and of switching the traveling device 7 forward or backward. A cabin 9 is provided in the machine body 3, and an operator seat 10 is provided in the cabin 9.

A coupler portion 8 is provided at the rear portion of the machine body 3. The coupler portion 8 is detachable with the working device 2. In this embodiment, the coupler portion 8 is a lifter device that raises and lowers the attached working device 2.

The working device 2 includes a cultivating device for cultivating, a fertilizer sprayer device for spraying fertilizer, a pesticide sprayer device for spraying pesticides, a harvester device for harvesting, a mower device for harvesting pastures and the like, a tedder device for diffusing pastures and the like, a grass rake for collecting pastures and the like, a baler device for molding pastures and the like.

The working device 2 is provided with a work controller device (controller device) 2a. The work controller device 2a is a device for various controls of the working device 2, and includes a CPU, electrical and electronic circuits, and the like.

The work controller device 2a has a storage device 2b for storing various information, for example, a control program, identification information, and the like. The storage device 2b includes a non-volatile memory or the like.

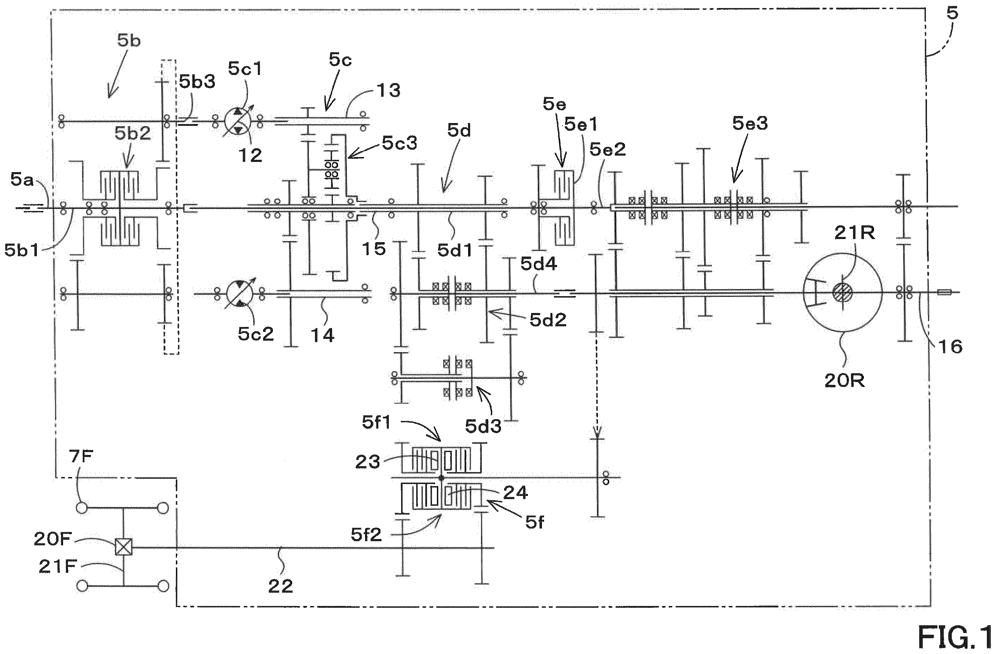

As shown in FIG. 1, the speed-shifter device 5 includes a main shaft (propulsion shaft) 5a, a shuttle portion 5b, a main speed-shifter portion 5c, a sub speed-shifter portion 5d, a PTO power speed-shifter portion 5e, and a front speed-shifter portion 5f. The propulsion shaft 5a is rotatably supported in the housing case of the speed-shifter device 5, and power from the crankshaft of the prime mover 4 is transmitted to the propulsion shaft 5a.

The shuttle portion 5b has a shuttle shaft 5b1 and a forward/backward switching portion 5b2. The power from the propulsion shaft 5a is transmitted to the shuttle shaft 5b1. The forward/backward switching portion 5b2 includes, for example, a hydraulic clutch or the like, and switches the direction of rotation of the shuttle shaft 5b1, that is, forward and backward movement of the tractor, by turning the hydraulic clutch on and off.

The main speed-shifter portion 5c is a stepless transmission mechanism that changes the input power to stepless. The stepless transmission mechanism has a hydraulic pump 5c1, a hydraulic motor 5c2, and a planetary gear mechanism 5c3.

The hydraulic pump 5c1 is rotated by power from the output shaft 5b3 of the shuttle portion 5b. The hydraulic pump 5c1 is, for example, a variable displacement pump having a swash plate 12, and by changing the angle of the swash plate 12 (a swash plate angle), the flow rate of hydraulic fluid output from the hydraulic pump 5c1 can be changed.

The hydraulic motor 5c2 is a motor that is rotated by the hydraulic fluid output from the hydraulic pump 5c1 through a piping or other fluid circuit. The number of revolutions of the hydraulic motor 5c2 can be changed by changing the swash plate angle of the hydraulic pump 5c1 or by changing the power input to the hydraulic pump 5c1.

The planetary gear mechanism 5c3 is a mechanism including a plurality of gears (gears) and a power transmission shaft such as an input shaft and an output shaft, and includes an input shaft 13, wherein the power of the hydraulic pump 5c1 is input, an input shaft 14, wherein the power of the hydraulic motor 5c2 is input, and an output shaft 15, wherein the power is output. The planetary gear mechanism 5c3 combines the power of the hydraulic pump 5c1 and the power of the hydraulic motor 5c2 and transmits the combined power to the output shaft 15.

Accordingly, according to the main speed-shifter portion 5c, the power output to the sub speed-shifter portion 5d can be changed by changing the swash plate angle of the swash plate 12 of the hydraulic pump 5c1, the number of revolutions of the prime mover 4, and the like, according to the main speed-shifter portion 5c. Although the main speed-shifter portion 5c includes a stepless transmission mechanism, the main speed-shifter portion 5c may be a stepless transmission mechanism in which gears are used to change the speed.

The sub speed-shifter portion 5d is a transmission mechanism having a plurality of stepped gears (gears) for changing the power, and by changing the connection (engagement) of the plurality of gears accordingly, the power input to the sub speed-shifter portion 5d from the output shaft 15 of the planetary gear mechanism 5c3 is changed and output (shifting). The sub speed-shifter portion 5d includes an input shaft 5d1, a first speed-shifter clutch 5d2, a second speed-shifter clutch 5d3, and an output shaft 5d4.

The input shaft 5d1 is a shaft to which the power of the output shaft 15 of the planetary gear mechanism 5c3 is input, and inputs the input power to the first speed-shifter clutch 5d2 and the second speed-shifter clutch 5d3 via gears and the like.

By switching the connection and disconnection of the first speed-shifter clutch 5d2 and the second speed-shifter clutch 5d3, the input power is changed and output to the output shaft 5d4. The power output to the output shaft 5d4 is transmitted to the rear wheel differential device 20R. The rear wheel differential device 20R rotatably supports the rear axle 21R on which the rear wheels 7R are mounted.

The PTO power speed-shifter device 5e has a PTO clutch 5e1, a PTO propulsion shaft 5e2, and a PTO speed-shifter device 5e3. For example, the PTO clutch 5e1 is constituted of a hydraulic clutch or the like, and is configured to switch by turning the hydraulic clutch on and off between a state where the power of the propulsion shaft 5a is transmitted to the PTO propulsion shaft 5e2 (an engaged state) and a state where the power of the propulsion shaft 5a is not transmitted to the PTO propulsion shaft 5e2 (a disengaged state).

The PTO speed-shifter portion 5e3 includes a speed-shifter clutch and a plurality of gears, and outputs the power (speed) input from the PTO propulsion shaft 5e2 to the PTO speed-shifter portion 5e3 by changing the power (speed).

The front speed-shifter portion 5f has a first front speed-shifter clutch 5f1 and a second front speed-shifter clutch 5f2. The first and second front speed-shifter clutches 5f1 and 5f2 are capable of transmitting power from the sub-speed speed-shifter portion 5d, for example, the power of the output shaft 5d4 is transmitted via the gear and the transmission shaft. The power from the first and second front speed-shifter clutches 5f1 and 5f2 can be transmitted to the front axle 21F via the front transmission shaft 22.

In particular, the front transmission shaft 22 is connected to the front wheel differential device 20F, and the front wheel differential device 20F rotatably supports the front axle 21F to which the front wheels 7F are attached.

The first front speed-shifter clutch 5f1 and the second front speed-shifter clutch 5f2 include a hydraulic clutch or the like. A fluid line is connected to the first front speed-shifter clutch 5f1, and the fluid line is connected to a control valve 23 to which hydraulic fluid output from the hydraulic pump is supplied.

The first front speed-shifter clutch 5f1 is switched between an engaged state and a disengaged state according to the degree of opening of the control valve 23. A fluid line is connected to the second front speed-shifter clutch 5f2, and the fluid line is connected to the control valve 24.

The second front speed-shifter clutch 5f2 is switched between to an engaged state and a disengaged state by opening the control valve 24. The control valve 23 and the control valve 24 are, for example, a two-position switching valve with a solenoid valve, which is switched between the engaged state and the disengaged state by magnetization or demagnetization of the solenoid valve.

When the first front speed-shifter clutch 5f1 is disengaged and the second front speed-shifter clutch 5f2 is engaged, the power of the sub speed-shifter portion 5d is transmitted to the front wheels 7F through the second front speed-shifter clutch 5f2. This results in four-wheel drive (4WD) in which the front and rear wheels are driven by the power, and in which the rotation speeds of the front and rear wheels are approximately the same (4WD constant speed state).

On the other hand, when the first front speed-shifter clutch 5f1 is engaged and the second front speed-shifter clutch 5f2 is disengaged, four-wheel drive is provided and the rotation speed of the front wheels becomes higher than that of the rear wheels (4WD double speed state).

When the first and second front speed-shifter clutches 5f1 and 5f2 are engaged, the power of the sub speed-shifter portion 5d is not transmitted to the front wheels 7F, and thus the rear wheels are driven by power in a two-wheel drive (2WD) system.

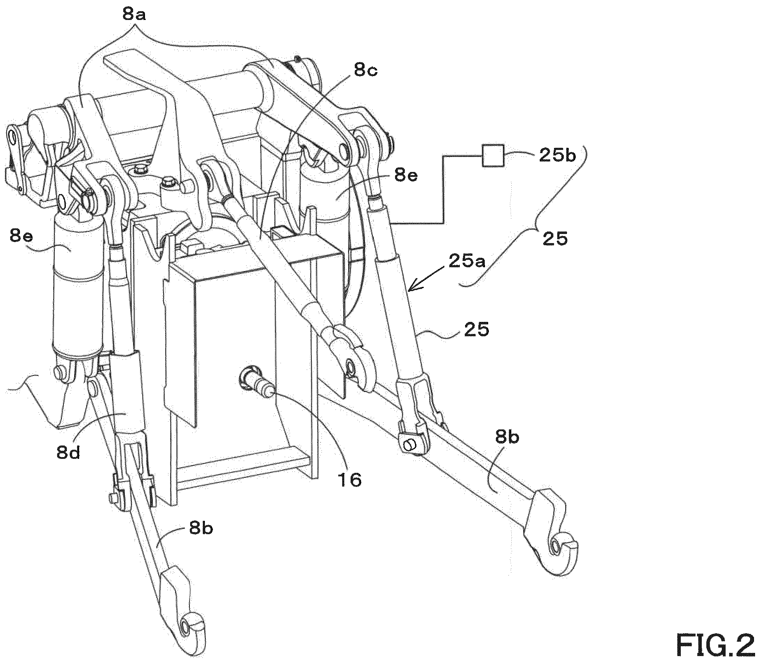

As shown in FIG. 2, the lifter device (coupler portion) 8 has a lift arm 8a, a lower link 8b, a top link 8c, a lift rod 8d, and a lift cylinder 8e. The front end portion of the lift arm 8a is pivotally supported upwardly or downwardly in the upper rear portion of the case (transmission case) housing the speed-shifter device 5. The lift arm 8a is pivoted (raised or lowered) by the actuation of the lift cylinder 8e.

The lift cylinder 8e includes a hydraulic cylinder. The lift cylinder 8e is connected to a hydraulic pump via a control valve 34. The control valve 34 is a solenoid valve or the like, which stretches and shortens the lift cylinder 8e.

The front end portion of the lower link 8b is pivotally supported upwardly or downwardly in the rear lower portion of the speed-shifter device 5. The front end portion of the top link 8c is pivotally supported upwardly or downwardly on the rear portion of the speed-shifter device 5 above the lower link 8b. A lift rod 8d connects the lift arm 8a to the lower link 8b.

A working device 2 is connected to the rear portion of the lower link 8b and the rear portion of the top link 8c. When the lift cylinder 8e is activated (telescoping), the lift arm 8a is raised and lowered, and the lower link 8b connected to the lift arm 8a via the lift rod 8d is raised and lowered.

This allows the working device 2 to pivot (raise or lower) upward or downward with the front portion of the lower link 8b as the fulcrum.

A posture changer device 25 is provided in the lifter device 8. The posture changer device 25 is a device for changing the posture of the working device 2 mounted on the machine body 3. The posture changer device 25 has a changer cylinder 25a including a hydraulic cylinder and a control valve 25b.

The changer cylinder 25a is connected to the hydraulic pump via a control valve 25b. The control valve 25b is a solenoid valve or the like to extend and retract the changer cylinder 25a. The changer cylinder 25a connects the lift arm 8a to the lower link 8b.

As shown in FIG. 3, the tractor has a plurality of hydraulic control valves 27. The plurality of hydraulic control valves 27 are hydraulic switching valves to which hydraulic fluid is supplied from the hydraulic pump 28. The plurality of hydraulic control valves 27 each have output ports, and a hydraulic hose or the like can be connected to any of the output ports. The hydraulic hoses connected to any of the output ports of the hydraulic control valves 27 can be connected to the hydraulic attachments of the working device 2 to operate the various hydraulic attachments attached to the working device 2.

As shown in FIG. 3, the steering device 11 has a steering wheel (steering wheel) 11a, a rotating shaft (steering axis) 11b that rotates with the rotation of the steering wheel 11a, and an assist mechanism (power steering mechanism) 11c that assists the steering of the steering wheel 11a. The assist mechanism 11c includes a control valve 35 and a steering cylinder 32.

The control valve 35 is, for example, a three-position switching valve that can be switched by movement of a spool or the like. The control valve 35 can also be switched by steering the steering shaft 11B. The steering cylinder 32 is connected to an arm (knuckle arm) 36, which changes the direction of the front wheels 7F.

Accordingly, by operating the handle 11a, the switching position and opening degree of the control valve 35 is switched according to the handle 11a, and the steering direction of the front wheels 7F can be changed by telescoping the steering cylinder 32 to the left or right according to the switching position and opening degree of the control valve 35. The steering device 11 described above is an example and is not limited to the configuration described above.

As shown in FIG. 3, the tractor is provided with a plurality of detector devices 41. The plurality of detector devices 41 are devices for detecting a condition of the tractor. The plurality of detector devices 41 include, for example, a water temperature sensor 41a for detecting the water temperature, a fuel sensor 41b for detecting the remaining amount of fuel, a prime mover revolutions sensor (rotation sensor) 41c for detecting the number of revolutions of the prime mover 4, an accelerator pedal sensor 41d for detecting the amount of operation of the accelerator pedal, a steering angle sensor 41e for detecting the steering angle of the steering device 11, an angle sensor 41f for detecting the angle of the lift arm 8a, a tilt detector sensor 41g for detecting the tilt of the machine body 3 in the width direction (right or left), a speed sensor 41h for detecting the speed of the machine body 3, a PTO rotation sensor (rotation sensor) 41i for detecting the number of rotations of the PTO axis, a battery sensor 41j for detecting the voltage of the storage batteries of the machine body, a positioning sensor (positioning device) 41k for detecting the position of the machine body 3 based on signals from positioning satellites and the like.

The positioning device 41k is capable of detecting its own position (positioning information including latitude and longitude) by a satellite positioning system (positioning satellites) such as D-GPS, GPS, GLONASS, HOKUTO, GALILEO, and MICHIBIKI.

That is, the positioning device 41k receives a satellite signal transmitted from the positioning satellite (position of the positioning satellite, transmission time, correction information, and the like) and detects the position (for example, latitude and longitude) of the tractor 1, that is, the body position, based on the satellite signal. The positioning device 41k has a receiver device and an Inertial Measurement Unit (IMU).

The receiver device is a device having an antenna or the like to receive satellite signals transmitted from a positioning satellite and is attached to the machine body 3 separately from the inertial measurement device. In this embodiment, the receiver device is attached to the machine body 3. The attachment point of the receiver device is not limited to the embodiment.

The inertial measurement device has an acceleration sensor to detect acceleration, a gyro sensor to detect angular velocity, and the like. The machine body 3, for example, is installed below the operator seat 10, and the roll angle, pitch angle, yaw angle, and the like of the machine body 3 can be detected by the inertial measurement device.

The speed sensor 41h detects the vehicle speed by converting, for example, the number of rotations of the front axle 21F, the number of rotations of the rear axle 21R, the number of rotations of the front wheels 7F, the number of rotations of the rear wheels 7R, and the like into vehicle speed. The speed sensor 41h can also detect the directions of rotations of the front axle 21F, the rear axle 21R, the front wheels 7F and the rear wheels 7R, and can also detect whether the tractor (machine body 3) is moving forward or backward. The detector device 41 described above is an example and is not limited to the sensors described above.

The tractor is also provided with a plurality of operating members (controller devices) 42. The plurality of operation members 42 include a shuttle lever 42a for switching the forward or backward movement of the machine body 3, an ignition switch 42b for starting the prime mover 4 and the like, a PTO speed-shifter lever 42c for setting the number of revolutions of the PTO shaft, a speed-shifter change switch 42d for switching between automatic speed-shifting and manual speed-shifting, a speed-shifter lever 42e to manually switch speed-shifting steps (speed-shifting level) pf the speed-shifter device 5, the accelerator 42f to accelerate or decelerate the vehicle speed, a one-touch switch 42g to raise or lower the lifter device 8, a height setting dial 42h for setting the upper limit of the lifter device 8, a vehicle speed lever 42i for setting the vehicle speed, a hydraulic operation tool 42j, a revolutions setting tool 42k for setting the upper limit of the revolutions speed of the prime mover, and the like.

The setting tools, such as the speed-shifter change switch 42d, the height setting dial 42h, and the revolutions setting tool 42k are provided in a console box on the side of the operator seat 10. The operation of the machine body 3 can be set by the operator by operating the setting tools (the speed-shifter change switch 42d, the height setting dial 42h, and the revolutions setting tool 42k). The operation members 42 described above are an example and are not limited to those described above.

As shown in FIG. 3, the tractor has a plurality of machine body controller devices 40. The machine body controller device 40 is a device that performs various controls of the tractor (machine body 3) and includes a CPU, electrical and electronic circuits, or the like. The machine body controller device 40 has a storage device 43 that stores various information, for example, a control program, identification information, and the like.

The storage device 43 includes a non-volatile memory or the like. That is, the plurality of machine body controller devices 40 are electrical components provided with the storage device 43.

The plurality of machine body controller devices 40 include a speed-shifting controller device 40A, an engine controller device 40B, a PTO controller device 40C, an lifting controller device 40D, an posture controller device 40F, an assist hydraulic controller device 40G, and an automatic traveling controller device 40H.

The controller device 40 need not include all of the speed-shifting controller device 40A, the engine controller device 40B, the PTO controller device 40C, the lifting controller device 40D, the automatic steering controller device 40E, the posture controller device 40F, and the assist hydraulic controller device 40G, and may be provided according to the specifications of the tractor.

The speed-shifting controller device 40A, the engine controller device 40B, the PTO controller device 40C, the lifting controller device 40D, the automatic steering controller device 40E, the posture controller device 40F and the assist hydraulic controller device 40G may be provided in an integrated controller device.

The speed-shifting controller device 40A executes the speed shifting control. In the speed shifting control, when the automatic speed shifting function is enabled, one of the main speed-shifter portion 5c and the sub speed-shifter portion 5d are automatically switched according to the condition of the tractor, and the speed shifting stage (speed shifting level) of the speed-shifter device 5 is automatically changed to a predetermined speed shifting stage (speed shifting level).

In the speed shifting control, when the speed-shifter change switch 42d is switched to the manual speed shifting, one of the main speed-shifter portion 5c and one of the sub speed-shifter portion 5d is automatically switched according to the speed shifting level (speed shifting level) set by the speed-shifter lever 42e, to change the speed shifting level of the speed-shifter device 5.

The speed shifting controller device 40A performs control (traveling switching control) of the traveling drive state (operation of the traveling device 7) of the traveling device 7. In the traveling switching control, when the shuttle lever 42A is operated in the forward direction, the forward/backward switching portion 5b2 of the shuttle portion 5b is switched to forward, thereby advancing the machine body 3.

The traveling switching control causes the machine body 3 to move backward by switching the forward/backward switching portion 5b2 of the shuttle portion 5b to backward when the shuttle lever 42a is operated to backward.

In the traveling switching control, in the case of 4WD, the first front speed-shifter clutch 5f1 is disconnected and the second front speed-shifter clutch 5f2 is connected. In the traveling switching control, in case of 4WD double speed, the first front speed-shifter clutch 5f1 shall be connected and the second front speed-shifter clutch 5f2 shall be disengaged. In the traveling switching control, in case of 2-wheel drive, the first front speed-shifter clutch 5f1 and the second front speed-shifter clutch 5f2 are engaged.

The engine controller device 40B executes the engine control. In the engine control, when the ignition switch 42b is operated to ON, the prime mover 4 is started after a predetermined process, and when the ignition switch 42b is operated to OFF, the driving of the prime mover 4 is stopped.

In the engine control, when the accelerator 42f is operated, the vehicle speed (velocity) of the machine body 3 is changed by changing the number of revolutions of the prime mover 4 (referred to as the prime mover speed) according to the amount of operation of the accelerator 42f.

The PTO controller device 40C performs the PTO control, in which the number of revolutions of the PTO shaft (referred to as the PTO speed) is changed by switching the PTO shifting gear incorporated in the speed-shifter device 5 when the PTO shifting lever 42c is operated.

The lifting controller device 40D performs the lifting and lowering control. In the lifting and lowering control, when the manual lifting and lowering function is enabled, when the one-touch switch 42g is operated in the direction of raising (the upward side), the control valve 34 is controlled to extend the lift cylinder 8e to raise the rear end portion of the lift arm 8a (the end portion of the working device 2 side).

In the lifting and lowering control, when the manual lifting and lowering function is enabled, when the one-touch switch 42g is operated in the direction of lowering (downward), the control valve 34 is controlled to contract the lift cylinder 8e to lower the rear end portion of the lift arm 8a (the end portion of the working device 2 side).

When the working device 2 is being lifted by the lifter device 8, when the position of the working device 2, that is, the angle of the lift arm 8a, reaches the upper limit (upper height limit) set by the height setting dial 42h, the lifting operation in the lifter device 8 is stopped.

In the lifting and lowering control, when the backup function is enabled, the control valve 34 is automatically controlled to extend the lift cylinder 8e and raise the rear end portion of the lift arm 8a (the end portion of the working device 2 side) by controlling the control valve 34 when the machine body 3 moves backward.

In the lifting control, when the auto-up function is enabled, when the steering angle of the steering device 11 reaches a predetermined level or higher, the control valve 34 is automatically controlled to extend the lift cylinder 8e to raise the rear end portion of the lift arm 8a (the end on the working device 2 side) by controlling the control valve 34.

The posture controller device 40F performs posture control. In the posture control, when it is a positional function (fixed function), the length of the changer cylinder 25a is fixed to a predetermined length by outputting a control signal to the control valve 25b. That is, the angle in the width direction of the working device 2 (the angle of a straight line connecting the lower links 8b and 8b with respect to the horizontal direction) set by the posture changer device 25 is fixed.

In the posture control, when it is a leveling function, by outputting a control signal to the control valve 25b, the changer cylinder 25a is stretched or shortened to maintain the working device 2 set by the posture changer device 25 in the field (ground) by outputting a control signal to the control valve 25b. In posture control, when the posture control is a tilting function, the changer cylinder 25a is stretched or shortened by outputting a control signal to the control valve 25b to maintain the working device 2 set by the posture changer device 25 parallel to the field (ground).

The assist hydraulic controller device 40G controls an assist valve (operation control valve) 27 to which a hydraulic hose or the like is connected out of the plurality of hydraulic control valves 27. For example, the assist hydraulic controller device 40G switches the flow of hydraulic fluid output from the predetermined hydraulic control valve 27 when the hydraulic operation tool 42j, such as a pivotable lever, is operated.

For example, when the hydraulic operation tool 42j is operated in the left direction, the assist hydraulic controller device 40G magnetizes the solenoid of the predetermined hydraulic control valve 27 and moves the spool of the predetermined hydraulic control valve 27 to make the direction of hydraulic fluid flow in one direction.

When the hydraulic operation tool 42j is operated in the right direction, the assist hydraulic controller device 40G magnetizes the solenoid of the predetermined hydraulic control valve 27 to move the spool of the predetermined hydraulic control valve 27 to move the spool of the predetermined hydraulic control valve 27 in the other direction of the hydraulic fluid flow.

This allows the hydraulic attachment of the working device 2 to be operated by the hydraulic control valve 27.

An driving switch 65 is connected to the tractor. The driving switch 65 is a switch that can be switched ON/OFF, and when it is ON, the automatic traveling controller device 40H can be set to the automatic traveling mode, and when it is OFF, the automatic traveling controller device 40H can be set to the manual driving mode.

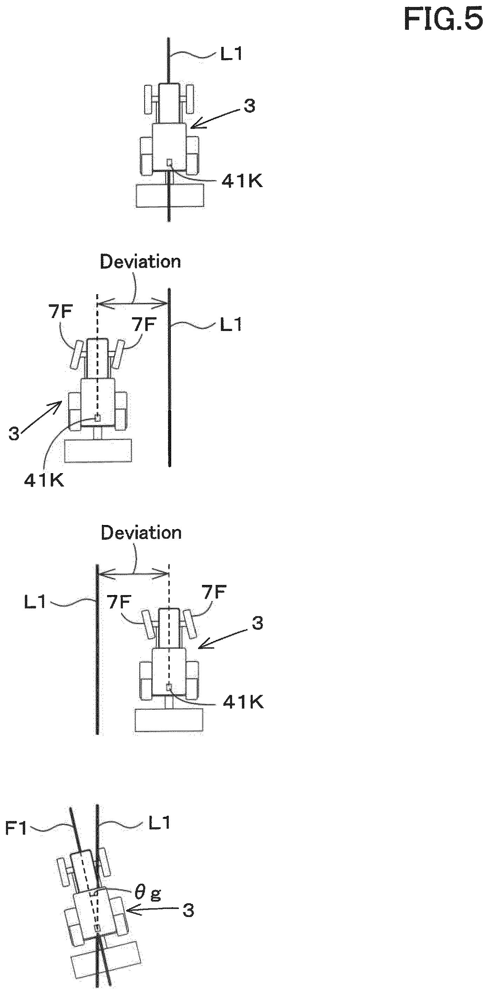

The automatic traveling controller device 40H controls the automatic driving of the machine body 3. The automatic traveling controller device 40H starts automatic driving when it is in the automatic traveling mode. As shown in FIG. 5, when the deviation between the body position G1 and the scheduled traveling route L1 is less than a threshold value under a situation where the tractor is in automatic operation, the automatic traveling controller device 40H maintains the rotation angle of the steering axis (rotation axis) 31.

If the deviation between the vehicle position G1 and the scheduled traveling route L1 is greater than or equal to a threshold value and the tractor is located on the left side with respect to the scheduled traveling route L1, the automatic traveling controller device 40H rotates the steering axis 31 so that the steering direction of the tractor is in the right direction.

When the deviation between the vehicle position G1 and the scheduled traveling route L1 is greater than or equal to a threshold value and the tractor is located on the right side with respect to the scheduled traveling route L1, the automatic traveling controller device 40H rotates the steering axis 31 so that the steering direction of the tractor is in a left direction.

In the above-described embodiment, the steering angle of the steering device 29 was changed based on the deviation between the body position G1 and the scheduled traveling route L1. However, when the azimuth of the scheduled traveling route L1 differs from the azimuth of the direction in which the tractor (machine body 3) is to travel (body orientation), that is, when the angle of the body orientation with respect to the scheduled traveling route L1 is greater than or equal to a threshold value, the automatic travel controller device 40H may set the steering such that the angle becomes zero (body orientation F1 coincides with the azimuth of the scheduled traveling route L1).

The automatic traveling controller device 40H may set the final steering angle in automatic operation based on the steering angle that is obtained based on the deviation (position deviation) and the steering angle that is obtained based on the heading (heading deviation). The setting of the steering angle in automatic operation in the above-described embodiments is an example and is not limited thereto.

When the scheduled traveling route L1 and the vehicle speed are mapped to the scheduled traveling route L1, the automatic travel controller device 40H automatically changes the shift step of the speed shifter, the speed of the prime mover and the like so that the current vehicle speed of the tractor matches the vehicle speed corresponding to the scheduled traveling route L1.

The tractor is provided with a communicator device 46. The communicator device 46 is a communication device (a communication module) that performs either direct communication or an indirect communication to the external device 47. The communicator device 46 is, for example, an IEEE 802.11 series Wi-Fi (Wireless Fidelity, registered trademark), BLE (Bluetooth (registered trademark) Low Energy), LPWA (Low Power, Wide Area), LPWAN (Low- Power Wide-Area Network) or the like to perform wireless communication. The communicator device 46 may be a communication device (communication module) that performs wireless communication by means of a cellular telephone communication network or data communication network or the like.

The external device 47 is, for example, a mobile terminal (portable terminal) 47a, such as a tablet, smartphone, PDA, and the like, and a stationary terminal (fixed terminal) 47b, such as a personal computer, server, or other stationary computer.

The tractor is provided with a display device 45. The display device 45 is a device that displays various information about the tractor. The display device 45 is installed around the operator seat 10 and allows the operator to check the contents of the display. The display device 45 is a meter panel device for displaying operational information, an auxiliary panel device for making settings and the like related to various working machine, and the like.

The tractor (machine body 3) has an in-vehicle network N1. The in-vehicle network N1 is a network such as CAN (Controller Area Network), LIN (Local Interconnect Network), MOST (Media Oriented System Transport), FlexRay, ISO11783 (ISOBUS), and the like.

The in-vehicle network N1 is constituted of various electrical and other components and is connected to a plurality of machine body controller devices 40, a plurality of detector devices 41, a plurality of machine body controller devices 40, a communicator device 46, and a display device 45.

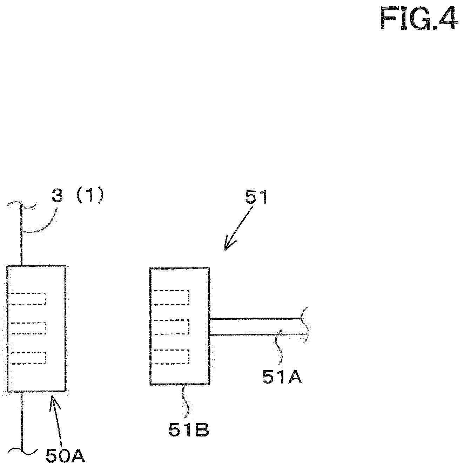

As shown in FIG. 3 and FIG. 4, the tractor (machine body 3) is provided with a first connector 50A for connecting to the in-vehicle network N1 from the outside, as shown in FIG. 3 and FIG. 4. The first connector 50A is provided at the rear portion of the machine body 3. For example, the first connector 50A is mounted at the rear portion of the lower portion of the cabin 9, for example, around a fender covering the upper portion of the rear wheels 7R.

A communication cable 51 is connectable to the first connector 50A, which can be connected to the working device 2. The communication cable 51 includes a cable 51A and a second connector 51B attached to the end portion of the cable 51A and capable of connecting to the first connector 50A.

By connecting a second connector 50B to the first connector 50A, a communication cable 51 can be connected to the first connector 50A. When the communication cable 51 is connected to the first connector 50A, the tractor (machine body 3) and the working device 2 can communicate with each other.

The shapes of the first connector 50A and the second connector 50B are not limited, and the first connector 50A side may have a male pin and the second connector 50B may have a female pin. The first connector 50A side may have a female pin and the second connector 50B may have a male pin. Furthermore, the structure may be any structure that allows a communication cable 51 to be connected to the first connector 50A via the second connector 50B.

Now, the external devices (mobile terminal 47a and stationary terminal 47b) can send various setting information to the working machine 1.

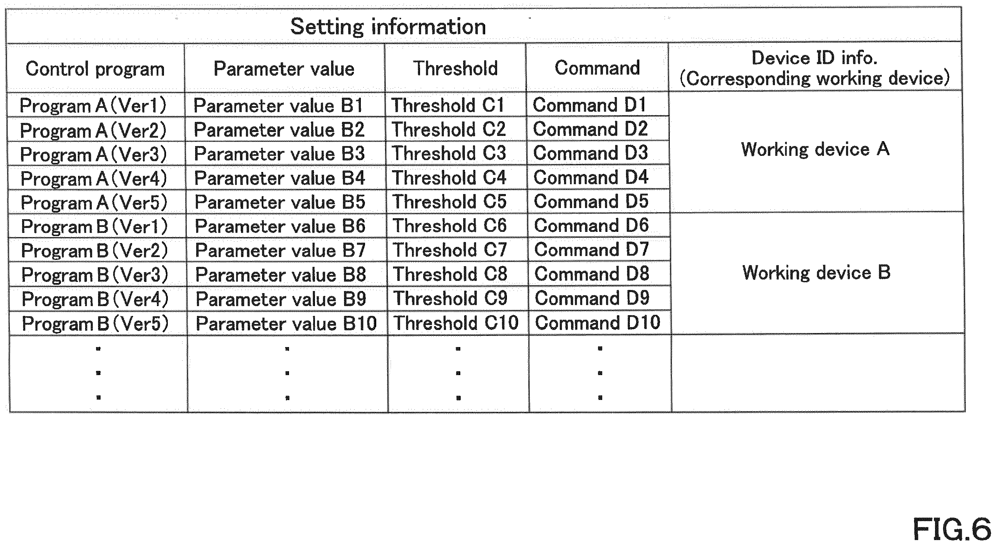

As shown in FIG. 6, the setting information is the control program, set values of control parameters, thresholds used in the control, commands, and the like necessary for each of the speed-shifting controller device 40A, the engine controller device 40B, the PTO controller device 40C, the lifting controller device 40D, the posture controller device 40F, the assist hydraulic controller device 40G, and the automatic traveling controller device 40H to perform the control.

The setting information includes device identification information such as the model and type of the working machine corresponding to the setting information.

For example, in the case of self-driving, when there is a deviation between the body position G1 and the scheduled traveling route L1, the control is performed so that the deviation is reduced, and the relation between the size of the deviation and the steering angle to eliminate the deviation is the setting information. The setting information is just an example and is not limited thereto.

The following explanation will take server 47b as an example.

As shown in FIG. 3, the server 47b has a database 80 for storing the setting information. The server 47b, in transmitting the setting information in the database 80, periodically or irregularly transmits the setting information to the predetermined working machine 1.

When the server 47b transmits the setting information, the server 47b processes a connection to the communicator device 46 of the working machine 1 to which the setting information is sent, and thereby the server 47b connects to the communicator device 46.

That is, when the server 47b and the communicator device 46 communicate with each other to send setting information, the server 47b determines the operation of transmission to the destination working machine 1 based on the response result of the communicator device 46, and the communicator device 46 determines the operation of receiving the setting information depending on the state of the working machine 1.

In particular, after the server 47b connects to the communicator device 46, the server 47b notifies the user of the transmission of the setting information (transmission notice).

The communicator device 46 outputs to a plurality of machine body controller device 40 of the working machine 1 (speed-shifting controller device 40A, engine controller device 40B, PTO controller device 40C, lifting controller device 40D, posture controller device 40F, assist hydraulic controller device 40G, and automatic travel controller device 40H) that there has been a notice of transmission of the setting information from the server 47B.

Each of the plurality of machine body controller devices 40 refers to the status of the control and, when it is under control, outputs to the communicator device 46 as a response result that the setting information cannot be accepted.

For example, when automatic traveling is controlled by the automatic traveling controller device 40H, the automatic traveling controller device 40H outputs to the communicator device 46 as a response result that the setting information cannot be accepted (not accepted).

On the other hand, when the automatic traveling is not controlled by the automatic traveling controller device 40H, the automatic traveling controller device 40H outputs to the communicator device 46 as a response result that the setting information can be accepted (acceptable).

The communicator device 46 transmits to the server 47b as a response result whether the response result is unacceptable or acceptable, that is, whether or not the machine is performing automatic traveling. The server 47b does not send the setting information to the working machine 1 when the server 47b receives information indicating that the working machine 1 is traveling automatically as a response result.

In the above-described embodiment, the automatic traveling controller device 40H outputs to all the machine body controller devices 40 that a transmission notice has been sent out by the automatic traveling controller device 40H. However, instead, only the automatic traveling controller device 40H is asked whether or not the automatic traveling is being performed, and when the automatic traveling is being performed, the server 47B is sent an unacceptable message to the server 47B, and when the automatic traveling is not being performed, the server 47B is sent a message showing "acceptable" to the server 47B.

In other words, the server 47b inquires whether or not the working machine 1 to be sent is in automatic operation, and even when it is time to send the setting information, the server 47b does not send the setting information when it is in automatic operation, and sends the setting information when it is not in automatic operation.

In the above-described embodiment, the communicator device 46 notifies the server 47b as a response result that it cannot accept setting information when the working machine 1 is traveling automatically as a state of the working machine 1, and the server 47b stops sending setting information to the communicator device 46 when the communicator device 46 cannot accept the information. However, instead, the communicator device 46 may accept the setting information from the server 47b once even while the vehicle is traveling automatically.

In particular, when the server 47b notifies the communicator device 46 of the transmission notice, the communicator device 46 inquires, as a result of the response, the capacity of the setting information to be transmitted by the server 47b. Before the server 47b transmits the setting information, the server 47b transmits the capacity of the setting information (transmission capacity) to the communicator device 46. The communicator device 46 refers to its own storage device 46a, and when the free capacity of the storage device 46a is greater than the transmission capacity, the communicator device 46 sends an acceptance to the server 47b.

The communicator device 46 sends a message "unacceptable" to the server 47b when the free space and transmission capacity of the storage device 46a is small. When the server 47b receives the message "acceptable", the server 47b sends the setting information to the communicator device 46.

When the communicator device 46 receives the setting information (accepts the setting information), the communicator device 46 stores the setting information sent from the server 47b in the storage device 46a, and does not output the setting information to the in-vehicle network N1 during automatic traveling. The communicator device 46 outputs the setting information stored in the storage device 46a to the in-vehicle network N1 when the automatic traveling ends.

In the above-mentioned embodiment, the communicator device 46 received the setting information while the working machine 1 was traveling automatically, but the communication with the server 47b may be forcibly disconnected during the automatic traveling so that the setting information is not received.

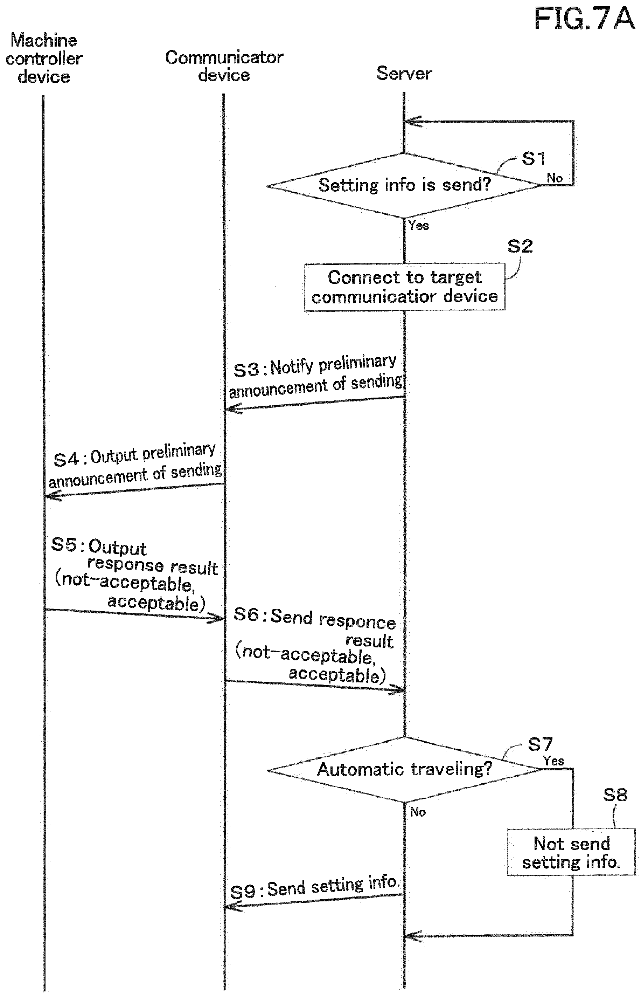

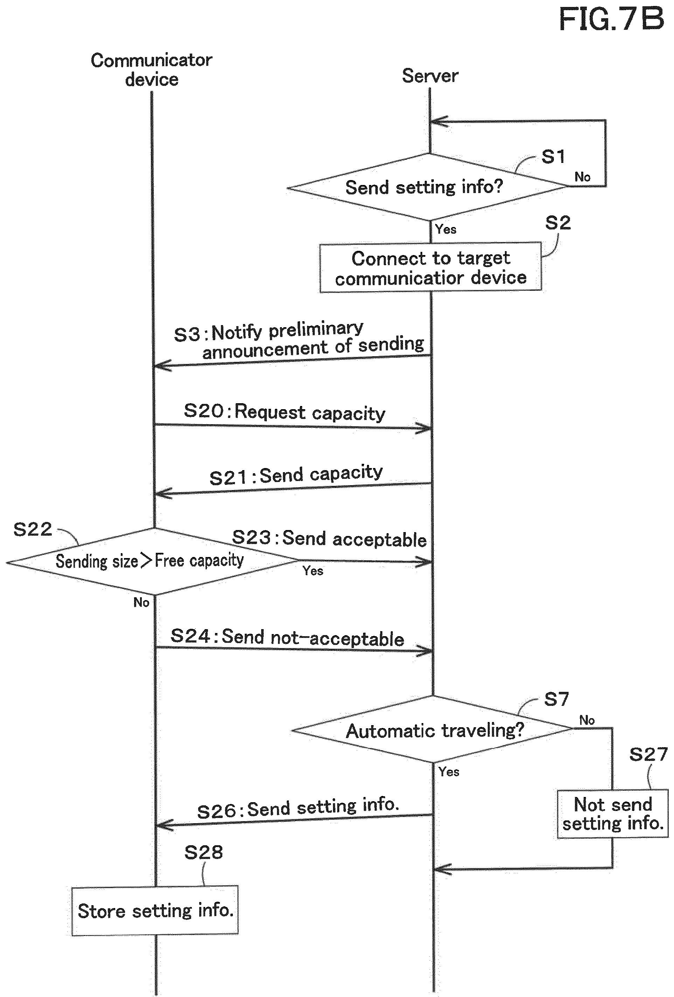

FIG. 7A and FIG. 7B illustrate the operation of sending and receiving the setting information.

When the setting information is sent from the server 47b (step S1, Yes), as shown in FIG. 7A, it is connected to the target communication device (step S2).

The server 47b notifies the communicator device 46 of the transmission notice (step S3).

The communicator device 46 outputs that a transmission notice has been sent to a plurality of machine body controller devices 40 of the working machine 1 (step S4).

The multiple machine body controller devices 40 output to the response result (unacceptable, acceptable) (step S5).

The communicator device 46 sends the response result (unacceptable, acceptable) to the server 47b (step S6).

When the server 47b receives information indicating that the working machine 1 is traveling automatically as a result of the response (step S7, Yes), the server 47b does not send the setting information to the working machine 1 (step S8).

When the server 47b receives information that the working machine 1 is not traveling automatically as a result of the response (step S7, No), the server 47b sends the setting information to the communicator device 46 (step S9).

As shown in FIG. 7B, when the server 47b notifies the communicator device 46 of the transmission notice after the processing of steps S1 and S2 (step S3).

The communicator device 46 queries the capacity of the setting information sent by the server 47b as a result of the response (step S20).

The server 47b transmits the transmission capacity to the communicator device 46 (step S21). The communicator device 46 transmits the acceptance to the server 47b when the free capacity is larger than the transmission capacity (step S22, Yes) (step S23).

The communicator device 46 sends a message "unacceptable" to the server 47b (step S24) when the free capacity is smaller than the transmission capacity (step S22, No).

When the server 47b receives the message "acceptable" (step S25, Yes), the server 47b sends the setting information to the communicator device 46 (step S26).

When the server 47b receives the message "unacceptable" (S25, No), the server 47b does not send the setting information to the communicator device 46 (step S27).

The communicator device 46 stores the setting information in the storage device 46a (step S28).

In the above-mentioned embodiment, the communicator device 46 received the setting information while the working machine 1 was traveling automatically, but the communication with the server 47b may be forcibly disconnected during the automatic traveling so that the setting information is not received.

The following paragraphs [0135] to [0158] do not relate to the present invention, but are useful to understand the invention.

As shown in FIG. 3, the tractor is provided with an update controller device 53C. The update controller device 53C is a device that controls updating the setting information of the working device 2, such as rewriting the setting information to the working device 2. The update controller device 53C is connected to the in-vehicle network N1. The update controller device 53C has a non-volatile storage device 54.

The update controller device 53C obtains and stores in sequence, to the storage device 544, the setting received by the communicator device 46 or the setting information temporally stored in the storage device 46a when the working machine is not driven, that is, when the control is not executed by each of a plurality of machine body controller device 40 (speed-shifting controller device 40A, engine controller device 40B, PTO controller device 40C, lifting controller device 40D, posture controller device 40F, assist hydraulic controller device 40G, and automatic traveling controller device 40H).

The update controller device 53C may cause the storage device 54 to store the setting information received by the communicator device 46 sequentially in a state where the working machine 1 is not in a working state and is stopped, such as a state where the prime mover 4 is being driven under the control by the engine controller device 40B. The method of storing the setting information in the storage device 54 is not limited. That is, the storage device 54 stores the setting information each time the setting information is sent from the server 47B.

For convenience of explanation, the correspondence between the control program and working devices A through E is shown. The working devices A to E are indicated by references "A" to "E" to indicate that the device identification information (model number, model, type, and the like) of the working device 2 is different.

When the communication cable 51 of the working device 2 is connected to the first connector 50A, the update controller device 53C makes an inquiry about the identification information of the working device 2 (device identification information) and the control program currently stored in the work controller device 2a of the working device 2. The work controller device 2a transmits the device identification information and information about the current control program (program name and version Ver) to the update controller device 53C in response to the inquiry of the update controller device 53C.

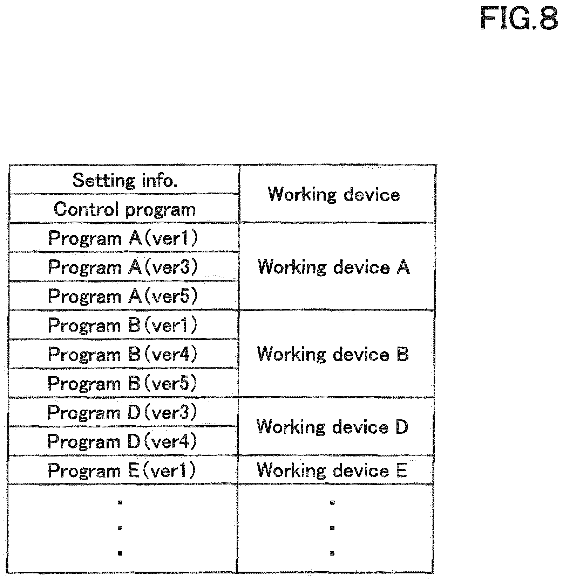

For example, suppose that the working device 2 is the working machine A shown in FIG. 8 and the control program responded to by the work controller device 2a is program A (Ver 1). In the working device 2 (A) connected to the tractor (machine body 3), the update controller device 53C stores program A (Ver 1), program A (Ver 3), and program A (Ver 5) in the storage device 54, so the update controller device 53C transmits the latest program A (Ver 5) to the working device 2 (A) to perform a process for rewriting (updating) the control program.

**In** other words, the update controller device 53C extracts the control program corresponding to the connected working device 2 from the storage device 54 and transmits it to the working device 2 when the working device 2 is coupled to the machine body 3.

Now, the update controller device 53C may not store the control program of the working device 2 connected to the machine body 3 when the working device 2 is connected to the machine body 3, when referring to the storage device 54.

For example, when the working device 2 connected to the tractor (machine body 3) is a reference "F", the control program corresponding to the working machine F is not stored in the storage device 54, as shown in FIG. 8.

**In** this case, the update controller device 53C informs the communicator device 46 that it does not possess (or store in the storage device 54) the control program corresponding to the connected working machine (connected working machine) 2.

The update controller device 53C also queries (refers) the current version of the control program to the work controller device 2a of the connected working device (working device F) and obtains the version of the control program from the work controller device 2a.

The update controller device 53C then also informs the communicator device 46 of the current control program version of the connected working device (working device F).

When the communicator device 46 is notified that it does not possess the control program corresponding to the connected working device (working device F) 2 and the version of the current control program of the connected working device (working device F) 2 (notification version), it makes a request to the server 47b for the control program of the connected working device (working device F) 2.

The server 47b transmits the control program corresponding to the connected working device (working device F) 2 to the communicator device 46 when the notified version is not the latest version. When the communicator device 46 receives the control program from the server 47b, the communicator device 46 transmits the control program received from the server 47b to the update controller device 53C, and the update controller device 53C stores the control program in the storage device 54.

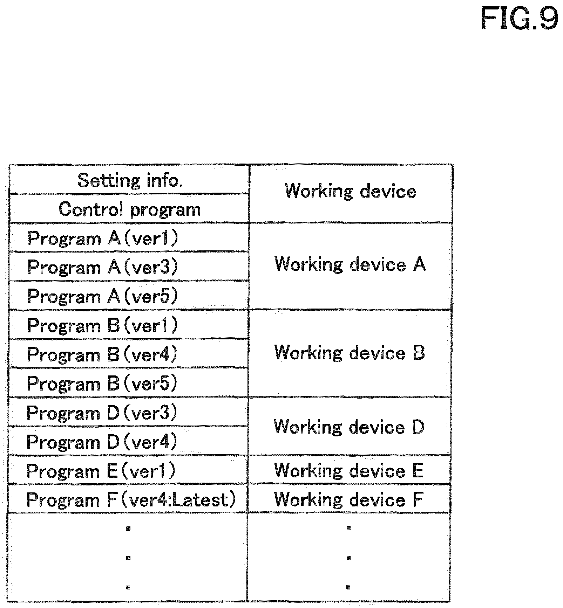

According to this configuration, as shown in FIG. 9, the latest control program corresponding to the connected working device (working device F) can be stored in the storage device 54, and the latest control program can be updated for the connected working device (working device F).

The update of the control program in the update controller device 53C is performed when automatic traveling is not being performed, as described above.

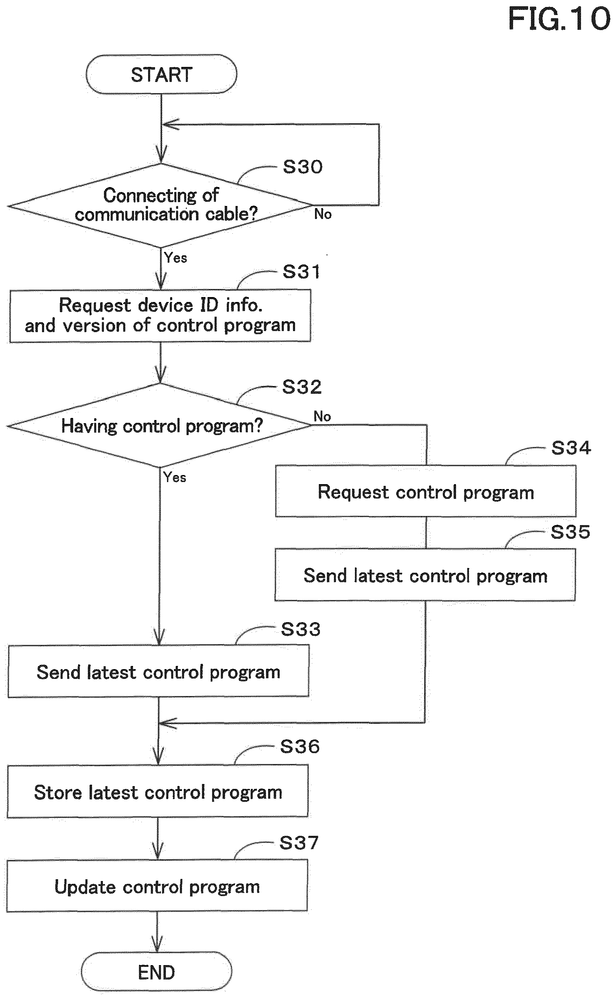

FIG. 10 shows a flow for updating the control program.

When the communication cable 51 of the work device 2 is connected to the first connector 50A (step S30, Yes), the update controller device 53C queries the work controller device 2a of the work device 2 for the device identification information and the version of the control program (step S31).

When the update controller device 53C receives the device identification information and the version of the control program, it determines whether or not it owns the control program corresponding to the work device 2 (step S32).

When owing the control program (step S32, Yes), transmit the latest control program to working device 2 (step S33).

When not owing the control program (step S32, No), request the latest control program from the server 47b via the communicator device 46 (step S34).

The server 47b sends the latest control program in response to the request (step S35).

When the communicator device 46 receives the latest control program, the update controller device 53C causes the update controller device 53C to store the latest control program in the storage device 54 (step S36).

The update controller device 53C updates the control program by sending the latest control program to the working device 2 (step S37).

The communication system for the working machine 1 includes the machine body 3, the working device 2 provided on the machine body 3 to perform work, the communicator device 46 to receive the setting information relating to setting of the machine body 3 or the working device 2, the controller device 40, and the server 47b. The communication system being configured to transmit the setting information from the server 47b to the working machine 1. The server 47b determines a transmitting operation to the working machine 1 based on a response result of the communicator device 46 when the server 47b communicates with the communicator device 46 to transmit the setting information, and the communicator device 46 determines an accepting operation for the setting information depending on a status of the working machine 1.

According to this configuration, while the server 47b can transmit the setting information in accordance with the state of the working machine 1, the communicator device 46 can also accept the setting information in accordance with the state of the working machine 1, and the delivery of the setting information between the working machine 1 and the server 47b can be made smooth.

The communication system of the working machine 1 does not send setting information to the working machine 1 when the server 47b receives information indicating that the working machine 1 is traveling automatically as a result of the response.

According to this configuration, it is possible to eliminate various effects of the transmission of setting information on automatic traveling by not actively transmitting setting information when the working machine 1 is traveling automatically, regardless of whether it is manned or unmanned.

The communicator device 46 does not output the setting information sent from the server 47b to the controller device 40 after accepting the setting information sent from the server 47b when the working machine 1 is traveling automatically as a state of the working machine 1.

According to this configuration, even when the communicator device 46 receives the setting information from the server 47b, it will send the setting information after the completion of the automatic traveling, thus eliminating various effects on the automatic traveling even when the setting information has been received from the server 47b.

The communicator device 46 does not accept the setting information by cutting communication with the server 47b when the working machine 1 is traveling automatically as a state of the working machine 1.

According to this configuration, even when the process of forcibly sending setting information from the server 47b is executed for some reason, or even when the process of sending setting information is executed without the server 47b being able to grasp the status of the working machine 1, the communicator device 46 side (the machine body 3) can control the reception of setting information in response to the various servers 47b, without receiving the setting information.

The communication system of the working machine 1 includes the machine body 3 capable of connecting working device 2, the storage device 54 provided in the machine body 3 and storing a control program for controlling the working device 2, and the update controller device 53C, which extracts the control program corresponding to the connected working device 2 from the storage device 54 and transmits it to the working device 2 when the working device 2 is connected to the machine body 3.

According to this configuration, when the working device 2 is connected to the machine body 3, the control program can be rewritten to be suitable for the working device 2.

The communication system of the working machine 1 is provided with the server 47b, which transmits the control program, and the communicator device 46, which receives the control program sent from the server 47b, and the storage device 54 stores the control program each time it is sent from the server 47b.

According to this configuration, the machine body 3 (storage device 54) side can possess (store) control programs corresponding to various working devices 2 in advance, and when the working devices 2 are connected, the control programs can be rewritten to be suitable for the working devices 2.

The update controller device 53C notifies the communicator device 46 of the absence of a control program when the control program of the working device 2 connected to the machine body 3 is not stored by referring to the storage device 54 when the working device 2 is connected to the machine body 3.

According to this configuration, even in a situation where the working device 2 is connected to the machine body 3 for the first time, the control program suitable for the working device 2 can be obtained and written to the working device 2 even when the working device 2 is not connected to the machine body 3 because it is rarely worked on for a long period of time.

The update controller device 53C refers to the version of the control program corresponding to the connected working device 2 when the working device 2 is coupled to the machine body 3, and notifies the communicator device 46 of the version.

The communicator device 46 transmits the version to the server 47b, and the server 47b transmits the latest control program to the communicator device 46 when the version is not the latest. According to this configuration, the latest version of the control program can be written to the work device 2.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims.

### [DESCRIPTION OF THE REFERENCE NUMERAL]

- 1: Working machine
- 2: Working device
- 2b: Storage device
- 3: Machine body
- 43: Storage device
- 46: Communicator device
- 47b: Server
- 53C: Update controller device
- 54: Storage device

## Claims

1. A communication system for a working machine (1), the communication system comprising:
a server (47b); and
the working machine (1) including a machine body (3) and a working device (2) coupled to the machine body (3) to perform work,
the working machine (1) further including
a communicator device (46) to wirelessly communicate with the server (47b), and
a controller device (40) connected to the communicator device (46) via an in-vehicle network (N1), the controller device (40) configured to control at least one part of the machine body (3) with setting information used in control necessary for the controller device (40) to perform the control of the at least one part of the machine body (3),
the communication system **characterised in that**:
the server (47b) notifies the communicator device (46) of a transmission notice indicating that the server (47b) is to transmit the setting information to the communicator device (46),
the communicator device (46) outputs the transmission notice to the controller device (40),
the controller device (40) outputs, to the communicator device (46), a response result indicating whether the setting information of the transmission notice is acceptable for the controller device (40),
the communicator device (46) transmits the response result to the server (47b), and
the server (47b) transmits, to the communicator device (46), the setting information of the transmission notice, when the response result indicates that the setting information of the transmission notice is acceptable.

2. The communication system for the working machine (1) according to claim 1, wherein
the controller device (40) outputs, to the communicator device (46), the response result indicating that the setting information of the transmission notice is not acceptable when the controller device (40) controls automatic driving of the working machine (1), and
the server (47b) does not transmit the setting information to the communicator device (46) , when receiving the response result indicating that the setting information of the transmission notice is not acceptable.

3. The communication system for the working machine (1) according to claim 1, wherein
the controller device (40) outputs, to the communicator device (46), the response result indicating that the setting information of the transmission notice is not acceptable when the controller device (40) controls automatic driving of the working machine (1),
the server (47b) transmits, to the communicator device (46), the setting information of the transmission notice, and
the communicator device (46) stores the setting information in a storage device (46a), does not output the setting information to the controller device (40), and outputs, to the controller device (40), the setting information stored in storage device after the controller device (40) finishes controlling the automatic driving of the working machine (1).

4. The communication system for the working machine (1) according to any one of claims 1 to 3, wherein
when the working machine (1) is under a state where automatic traveling is performed, the communicator device (46) disconnects communication with the server (47b) to stop accepting the setting information.

5. The communication system for the working machine according to any one of claims 2-4, the communication system further comprising:
a driving switch (65) connected the controller device (40) via the in-vehicle network, the driving switch (65) configured to switch an automatic driving mode to cause the controller device (40) to control automatic driving of the working machine (1), or a manual driving mode not to cause the controller device (40) to control automatic driving of the working machine (1).

6. The communication system for the working machine according to any one of claims 1-5, wherein
the communicator device (46) has a storage device (46a) to store the setting information, and
the communicator device (46) is configured to transmit, to the server (47b), the response result indicating that the setting information of the transmission notice is not acceptable, when a free capacity of the memory is less than a capacity required for storing the setting information of the transmission notice.

## Patentansprüche

1. Kommunikationssystem für eine Arbeitsmaschine (1), das Kommunikationssystem umfassend:
einen Server (47b); und
wobei die Arbeitsmaschine (1) einen Maschinenkörper (3) und eine Arbeitsvorrichtung (2), die mit dem Maschinenkörper (3) gekoppelt ist, um Arbeit durchzuführen, einschließt,
wobei die Arbeitsmaschine (1) ferner einschließt:
eine Kommunikatorvorrichtung (46), um mit dem Server (47b) drahtlos zu kommunizieren, und
eine Steuervorrichtung (40), die mit der Kommunikatorvorrichtung (46) über ein fahrzeuginternes Netzwerk (N1) verbunden ist, wobei die Steuervorrichtung (40) konfiguriert ist, um mindestens einen Teil des Maschinenkörpers (3) mit Einstellungsinformationen zu steuern, die für die Steuerung verwendet werden, die für die Steuervorrichtung (40) erforderlich sind, um die Steuerung des mindestens einen Teils des Maschinenkörpers (3) durchzuführen, wobei das Kommunikationssystem **dadurch gekennzeichnet, dass:**
der Server (47b) die Kommunikatorvorrichtung (46) über eine Übertragungsmitteilung benachrichtigt, die angibt, dass der Server (47b) die Einstellungsinformationen an die Kommunikatorvorrichtung (46) übertragen soll,
die Kommunikatorvorrichtung (46) die Übertragungsmitteilung an die Steuervorrichtung (40) ausgibt,
die Steuervorrichtung (40) an die Kommunikatorvorrichtung (46) ein Antwortergebnis ausgibt, das angibt, ob die Einstellungsinformationen der Übertragungsmitteilung für die Steuervorrichtung (40) akzeptabel sind,
die Kommunikatorvorrichtung (46) das Antwortergebnis an den Server (47b) überträgt, und der Server (47b) die Einstellungsinformationen der Übertragungsmitteilung an die Kommunikatorvorrichtung (46) überträgt, wenn das Antwortergebnis angibt, dass die Einstellungsinformationen der Übertragungsmitteilung akzeptabel sind.

2. Kommunikationssystem für die Arbeitsmaschine (1) nach Anspruch 1, wobei
wobei
die Steuervorrichtung (40) an die Kommunikatorvorrichtung (46) das Antwortergebnis ausgibt, das angibt, dass die Einstellungsinformationen der Übertragungsmitteilung nicht akzeptabel sind, wenn die Steuervorrichtung (40) ein automatisches Antreiben der Arbeitsmaschine (1) steuert, und
der Server (47b) die Einstellungsinformationen nicht an die Kommunikatorvorrichtung (46) überträgt, beim Empfangen des Antwortergebnisses, das angibt, dass die Einstellungsinformationen der Übertragungsmitteilung nicht akzeptabel sind.

3. Kommunikationssystem für die Arbeitsmaschine (1) nach Anspruch 1, wobei
die Steuervorrichtung (40) an die Kommunikatorvorrichtung (46) das Antwortergebnis ausgibt, das angibt, dass die Einstellungsinformationen der Übertragungsmitteilung nicht akzeptabel sind, wenn die Steuervorrichtung (40) das automatische Antreiben der Arbeitsmaschine (1) steuert,
der Server (47b) die Einstellungsinformationen der Übertragungsmitteilung an die Kommunikatorvorrichtung (46) überträgt und
die Kommunikationsvorrichtung (46) die Einstellungsinformationen in einer Speichervorrichtung (46a) speichert, die Einstellungsinformationen nicht an die Steuervorrichtung (40) ausgibt und die in der Speichervorrichtung gespeicherten Einstellungsinformationen an die Steuervorrichtung (40) ausgibt, nachdem die Steuervorrichtung (40) das Steuern des automatischen Antreibens der Arbeitsmaschine (1) beendet hat.

4. Kommunikationssystem für die Arbeitsmaschine (1) nach einem der Ansprüche 1 bis 3, wobei
wenn die Arbeitsmaschine (1) in einem Zustand ist, in dem ein automatisches Fahren durchgeführt wird, die Kommunikatorvorrichtung (46) die Kommunikation mit dem Server (47b) trennt, um das Annehmen der Einstellungsinformationen zu beenden.

5. Kommunikationssystem für die Arbeitsmaschine nach einem der Ansprüche 2 bis 4, das Kommunikationssystem ferner umfassend:
einen Antriebsschalter (65), der mit der Steuervorrichtung (40) über das fahrzeuginterne Netzwerk verbunden ist, wobei der Antriebsschalter (65) konfiguriert ist, um in einen automatischen Antriebsmodus zu schalten, um die Steuervorrichtung (40) zu veranlassen, das automatische Antreiben der Arbeitsmaschine (1) zu steuern, oder in einen manuellen Antriebsmodus, um die Steuervorrichtung (40) nicht zu veranlassen, das automatische Antreiben der Arbeitsmaschine (1) zu steuern.

6. Kommunikationssystem für die Arbeitsmaschine nach einem der Ansprüche 1 bis 5, wobei
die Kommunikatorvorrichtung (46) eine Speichervorrichtung (46a), um Einstellungsinformationen zu speichern, aufweist, und
die Kommunikatorvorrichtung (46) konfiguriert ist, um das Antwortergebnis an den Server (47b) zu übertragen, das angibt, dass die Einstellungsinformationen der Übertragungsmitteilung nicht akzeptabel sind, wenn eine freie Kapazität des Speichers geringer als eine Kapazität ist, die zum Speichern der Einstellungsinformationen der Übertragungsmitteilung erforderlich ist.

## Revendications

1. Système de communication pour une machine de travail (1), le système de communication comprenant :
un serveur (47b) ; et
la machine de travail (1) comportant un corps de machine (3) et un dispositif de travail (2) couplé au corps de machine (3) pour réaliser un travail,
la machine de travail (1) comportant en outre
un dispositif d'appareil de communication (46) pour communiquer sans fil avec le serveur (47b), et
un dispositif d'organe de commande (40) connecté au dispositif d'appareil de communication (46) par l'intermédiaire d'un réseau embarqué (N1), le dispositif d'organe de commande (40) étant configuré pour commander au moins une partie du corps de machine (3) avec des informations de réglage utilisées dans la commande nécessaires pour que le dispositif d'organe de commande (40) réalise la commande de l'au moins une partie du corps de machine (3), le système de communication étant **caractérisé en ce que** :
le serveur (47b) notifie au dispositif d'appareil de communication (46) un avis de transmission indiquant que le serveur (47b) doit transmettre les informations de réglage au dispositif d'appareil de communication (46),
le dispositif d'appareil de communication (46) délivre en sortie l'avis de transmission au dispositif d'organe de commande (40),
le dispositif d'organe de commande (40) délivre en sortie au dispositif d'appareil de communication (46) un résultat de réponse indiquant si les informations de réglage de l'avis de transmission sont acceptables pour le dispositif d'organe de commande (40),
le dispositif d'appareil de communication (46) transmet le résultat de réponse au serveur (47b), et le serveur (47b) transmet, au dispositif d'appareil de communication (46), les informations de réglage de l'avis de transmission, lorsque le résultat de réponse indique que les informations de réglage de l'avis de transmission sont acceptables.

2. Système de communication pour la machine de travail (1) selon la revendication 1,
dans lequel
le dispositif d'organe de commande (40) délivre en sortie, au dispositif d'appareil de communication (46), le résultat de réponse indiquant que les informations de réglage de l'avis de transmission ne sont pas acceptables lorsque le dispositif d'organe de commande (40) commande la conduite automatique de la machine de travail (1), et
le serveur (47b) ne transmet pas les informations de réglage au dispositif d'appareil de communication (46) lors de la réception du résultat de réponse indiquant que les informations de réglage de l'avis de transmission ne sont pas acceptables.

3. Système de communication pour la machine de travail (1) selon la revendication 1, dans lequel
le dispositif d'organe de commande (40) délivre en sortie, au dispositif d'appareil de communication (46), le résultat de réponse indiquant que les informations de réglage de l'avis de transmission ne sont pas acceptables lorsque le dispositif d'organe de commande (40) commande la conduite automatique de la machine de travail (1),
le serveur (47b) transmet au dispositif d'appareil de communication (46) les informations de réglage de l'avis de transmission, et
le dispositif d'appareil de communication (46) stocke les informations de réglage dans un dispositif de stockage (46a), ne délivre pas en sortie les informations de réglage au dispositif d'organe de commande (40) et délivre en sortie, au dispositif d'organe de commande (40), les informations de réglage stockées dans le dispositif de stockage après la fin de la commande, par le dispositif d'organe de commande (40), de la conduite automatique de la machine de travail (1).

4. Système de communication pour la machine de travail (1) selon l'une quelconque des revendications 1 à 3, dans lequel
lorsque la machine de travail (1) est dans un état où le déplacement automatique est réalisé, le dispositif d'appareil de communication (46) coupe la communication avec le serveur (47b) pour cesser d'accepter les informations de réglage.

5. Système de communication pour la machine de travail selon l'une quelconque des revendications 2 à 4, le système de communication comprenant en outre :
un commutateur de conduite (65) connecté au dispositif d'organe de commande (40) par l'intermédiaire du réseau embarqué, le commutateur de conduite (65) étant configuré pour commuter un mode de conduite automatique afin d'amener le dispositif d'organe de commande (40) à commander la conduite automatique de la machine de travail (1), ou un mode de conduite manuelle pour ne pas amener le dispositif d'organe de commande (40) à commander la conduite automatique de la machine de travail (1).

6. Système de communication pour la machine de travail selon l'une quelconque des revendications 1 à 5, dans lequel
le dispositif d'appareil de communication (46) a un dispositif de stockage (46a) pour stocker les informations de réglage, et
le dispositif d'appareil de communication (46) est configuré pour transmettre, au serveur (47b), le résultat de réponse indiquant que les informations de réglage de l'avis de transmission ne sont pas acceptables, lorsqu'une capacité libre de la mémoire est inférieure à une capacité requise pour stocker les informations de réglage de l'avis de transmission.
